# EUROPEAN PATENT APPLICATION

(11) **EP 4 723 231 A1**
(43) Date of publication of application: **08.04.2026**
(21) Application number: 24906487.4
(22) Date of filing: 19.12.2024
(51) Int. Cl.: H01M 4/525, H01M 4/505, H01M 10/0525, C01G 53/00

(54) **POSITIVE ELECTRODE MATERIAL, AND PREPARATION METHOD THEREFOR AND USE THEREOF**

(30) Priority: 21.12.2023 CN 202311781702
(71) Applicant: Ningbo Ronbay New Energy Technology Co., Ltd., Yuyao Ningbo, Zhejiang 315402 (CN)
(72) Inventor: TIAN, Huaiyuan, Ningbo, Zhejiang 315402 (CN); CHEN, Haiyang, Ningbo, Zhejiang 315402 (CN); LIU, Yi, Ningbo, Zhejiang 315402 (CN); SONG, Jie, Ningbo, Zhejiang 315402 (CN); WANG, Xueying, Ningbo, Zhejiang 315402 (CN); YAN, Xufeng, Ningbo, Zhejiang 315402 (CN)
(74) Representative: Bandpay & Greuter
(86) International application number: PCT/CN2024/140778
(87) International publication number: WO 2025/131012

(57) **Abstract**

A positive electrode material, a preparation method thereof and application thereof are provided. The positive electrode material includes secondary particles formed by the agglomeration of primary particles, and each of the primary particles includes an active material having a chemical formula of LiM_{z}(MnₓFe₁₋ₓ)_{1-z}(BO₃)_{y}(PO₄)_{1-y}, where M includes at least one of Mg, Ti, Nb, Al, Ni, and a rare earth element, 0.4 ≤ x ≤ 0.7, 0.0025 ≤ y ≤ 0.01, and 0 ≤ z ≤ 0.003; boron element in the primary particles has a mass percentage of 0.5% to 1%, and B-O bonds are provided between adjacent primary particles. In the positive electrode material, by introducing boron element into the active material, B-O bonds are formed between adjacent primary particles in the positive electrode material. The fluxing effect of the B-O bonds may enhance the compactness between the primary particles, reduce the spacing between adjacent primary particles. This is beneficial for improving the compaction density of a positive electrode active layer prepared by the positive electrode material, and enables the positive electrode material to have a high discharge capacity.

## Description

This application claims priority to Chinese patent application No. 202311781702.3, filed with the China National Intellectual Property Administration on December 21, 2023, entitled "Positive electrode Material, Preparation Method thereof, and Application thereof", which is hereby incorporated by reference in its entirety.

### TECHNICAL FIELD

This present application relates to the technology field of batteries, and in particular, to a positive electrode material, a preparation method thereof and application thereof.

### BACKGROUND

Lithium iron phosphate material has relatively good structural stability and is less prone to structural collapse during use. However, when lithium iron phosphate is used as a positive electrode active material, a positive electrode active layer has a lower compaction density.

### SUMMARY

Based on above, it is necessary to provide a positive electrode material, a preparation method thereof and application thereof for improving the compaction density of a positive electrode active layer.

A positive electrode material is provided, including secondary particles formed by the agglomeration of primary particles, and each of the primary particles includes an active material having a chemical formula of LiM_{z}(MnₓFe₁₋ₓ)_{1-z}(BO₃)_{y}(PO₄)_{1-y}; where M includes at least one of Mg, Ti, Nb, Al, Ni, and a rare earth element, 0.4 ≤ x ≤ 0.7, 0.0025 ≤ y ≤ 0.01, and 0 ≤ z ≤ 0.003; boron element in the primary particles has a mass percentage of 0.5% to 1%, and B-O bonds are provided between adjacent primary particles.

In the aforementioned positive electrode material, by introducing boron element into the active material, and making boron element in the primary particles has a larger mass percentage over the primary particles compared to the mass percentage of boron element in LiM_{z}(MnₓFe₁₋ₓ)_{1-z}(BO₃)_{y}(PO₄)_{1-y}, B-O bonds may be formed between adjacent primary particles in the positive electrode material. The fluxing effect of the B-O bonds may enhance the compactness between the primary particles, and reduce the spacing between adjacent primary particles. This is beneficial for improving the compaction density of a positive electrode active layer prepared by the positive electrode material, and enables the positive electrode material to have a higher discharge capacity.

In some embodiments, each of the primary particle further includes a coating layer provided on a surface of the active material, and the coating layer includes a boron-doped carbon material.

In some embodiments, the boron-doped carbon material has a chemical formula of BₘC₁₋ₘ, where 0.005 ≤ m ≤ 0.01.

In some embodiments, each of the primary particles has a D50 particle size of 0.3 µm to 0.5 µm.

In some embodiments, the secondary particle has a D50 particle size of 7 µm to 10 µm.

A preparation method for the positive electrode material is provided, including the following steps:
mixing a raw material with a solvent to prepare a dispersion liquid, and the raw material includes a lithium source, an iron source, a phosphorus source, and a boron source; or the raw material includes a lithium source, an M source, an iron source, a phosphorus source, and a boron source, and M includes at least one of Mg, Ti, Nb, Al, Ni, and a rare earth element; a molar ratio of boron element in the boron source to lithium element in the lithium source is (0.025-0.038):1;
performing a drying and granulating treatment on the dispersion liquid to obtain a powder material;
performing a sintering treatment on the powder material under a protective gas atmosphere.

In some embodiments, the raw material further includes a carbon source.

In some embodiments, the boron source includes at least one of boric acid and boron oxide.

In some embodiments, a solid dispersant in the dispersion liquid has a D50 particle size of 80 nm to 150 nm.

In some embodiments, the sintering treatment is a constant-temperature sintering treatment.

In some embodiments, a sintering temperature for the sintering treatment is 500 °C to 700 °C.

In some embodiments, a sintering time for the sintering treatment is 6 h to 10 h.

A positive electrode sheet is provided, including a positive current collector and a positive electrode active layer provided on at least one surface of the positive current collector, and the positive electrode active layer includes the positive electrode material or a positive electrode material prepared by the preparation method.

A battery is provided, including the positive electrode sheet.

An electronic device is provided, including the battery.

### BRIEF DESCRIPTION OF DRAWINGS

FIG. 1 is a scanning electron microscope (SEM) image of a positive electrode material according to an embodiment of the present application.
FIG. 2 is a transmission electron microscope (TEM) image of the positive electrode material corresponding to FIG. 1.
FIG. 3 is a scanning tunneling microscope (STM) image of the positive electrode material corresponding to FIG. 1.

### DESCRIPTION OF EMBODIMENTS

To make the aforementioned objects, features, and advantages of the present application more clearly and easily understood, detailed descriptions of the specific embodiments of the present application are provided below. In the following description, numerous specific details are set forth in order to provide a thorough understanding of the present application. However, the present application may be implemented in many different ways other than these described herein, and those skilled in the art may make similar modifications without departing from the essence of the present application. Therefore, the present application is not limited by the specific embodiments disclosed below.

In the present application, unless otherwise explicitly specified or limited, the terms "installation", "connection", "coupling", "fixing", and the like should be understood in their broadest sense. For example, they may refer to a fixed connection, a detachable connection, or an integral structure; a mechanical connection or an electrical connection; a direct connection or an indirect connection via an intermediate medium; or internal communication between two components or an interaction relationship between two components, unless otherwise explicitly specified. Those skilled in the art may understand the specific meanings of these terms in the context of the present application according to the specific circumstances.

Furthermore, the terms "first" and "second" are used solely for the purpose of description and cannot be interpreted as indicating or implying relative importance or implicitly indicating the number of technical features that they refer to. Therefore, features defined by "first", "second", etc., may explicitly or implicitly include at least one such feature. In the description of the present application, the term "a plurality of" means at least two, such as two, three, etc., unless otherwise specifically defined.

Unless otherwise defined, all technical and scientific terms used herein have the same meaning as commonly understood by those skilled in the art to which the present application belongs. The terms used herein are only for the purpose of describing specific embodiments and are not intended to limit the present application. The term "and/or" as used herein includes any and all combinations of one or more of the listed associated items.

One embodiment of the present application provides a positive electrode material. The positive electrode material includes secondary particles formed by the agglomeration of primary particles, and each of the primary particles includes an active material having a chemical formula of LiM_{z}(MnₓFe₁₋ₓ)_{1-z}(BO₃)_{y}(PO₄)_{1-y}, where M includes at least one of Mg, Ti, Nb, Al, Ni, and a rare earth element, 0.4 ≤ x ≤ 0.7, 0.003 ≤ y ≤ 0.01, and 0 ≤ z ≤ 0.003; boron element in the primary particles has a mass percentage of 0.5% to 1%, and B-O bonds are provided between adjacent primary particles.

In the positive electrode material of this embodiment, by introducing boron element into the active material, and making boron element in the primary particles has a larger mass percentage over the primary particles compared to the mass percentage of boron element in LiM_{z}(MnₓFe₁₋ₓ)_{1-z}(BO₃)_{y}(PO₄)_{1-y}, B-O bonds may be formed between adjacent primary particles in the positive electrode material. The fluxing effect of the B-O bonds may enhance the compactness between primary particles, and reduce the spacing between adjacent primary particles. This is beneficial for improving the compaction density of a positive electrode active layer prepared by the positive electrode material, and enables the positive electrode material to have a higher discharge capacity.

It may be understood that the mass percentage of boron element in the primary particles may be 0.5%, 0.6%, 0.7%, 0.8%, 0.9%, 1%, etc. Further optionally, the mass percentage of boron element in the primary particles may also be other values within a range of 0.5% to 1%.

It may be understood that y may represent a doping amount of boron element in the active material. Optionally, y may be 0.0025, 0.003, 0.004, 0.005, 0.006, 0.007, 0.008, 0.009, 0.01, etc. When y is small, the effect of boron doping may be difficult to realize; while when y is large, the intrinsic structure of lithium iron phosphate may be significantly changed, potentially limiting the full utilization of inherent advantages of lithium iron phosphate materials. Optionally, y may also be other values within a range of 0.0025 to 0.01.

Optionally, x may be 0.4, 0.45, 0.5, 0.55, 0.6, 0.65, 0.7, etc. When x is large, the intrinsic structure of lithium iron phosphate may be significantly changed, potentially limiting the full utilization of inherent advantages of lithium iron phosphate materials. Optionally, x may also be other values within a range of 0.4 to 0.7.

It may be understood that z may represent a doping amount of M element in the active material. Optionally, z may be 0, 0.001, 0.0015, 0.002, 0.0025, 0.003, etc. It may also be understood that when z is 0, it indicates that the active material does not contain M element. Optionally, z may also be other values within a range of 0 to 0.003. Further optionally, 0.001 ≤ z ≤ 0.003.

It may be understood that in the active material, LiMnₓFe₁₋ₓPO₄ serves as a base material and boron element is doped into the lattice of LiMnₓFe₁₋ₓPO₄. During the doping process of boron element, phosphorus element in LiMnₓFe₁₋ₓPO₄ may be partly replaced by boron element, thereby achieving the doping of boron element into the lattice of LiMnₓFe₁₋ₓPO₄.

In some embodiments, each of the primary particles further includes a coating layer provided on a surface of the active material, and the coating layer includes a boron-doped carbon material. Boron element in an excessive amount can enter the coating layer, making the coating layer include a boron-doped carbon material. By providing the coating layer, on one hand, the coating layer may provide certain protection to the active material, improving the stability of the active material during use; on the other hand, the coating layer may provide good electrical conductivity, enhancing the electrical conductivity of the positive electrode material, thereby improving rate performance of a battery. Optionally, the coating layer may be provided on part of the surface of the active material, or the coating layer may be provided on the entire surface of the active material.

In some embodiments, B-O bonds are provided between coating layers of adjacent primary particles. The effect of the B-O bonds may enhance the compactness between primary particles, and reduce the spacing between adjacent primary particles. This is beneficial for improving the compaction density of a positive electrode active layer prepared by the positive electrode material.

It may be understood that when each primary particle further includes a coating layer, the primary particle has a core-shell structure including an inner core and an outer shell coated on a surface of the inner core. The inner core includes an active material having a chemical formula of LiM_{z}(Mnₓ-Fe_{1-z})_{1-z}(BO₃)_{y}(PO₄)_{1-y}, where M includes at least one of Mg, Ti, Nb, Al, Ni, and a rare earth element, 0.4 ≤ x ≤ 0.7, 0.0025 ≤ y < 0.01, and 0 ≤ z ≤ 0.003. The outer shell includes a boron-doped carbon material. Optionally, the outer shell is coated on part of the surface of the inner core, or the outer shell is coated on the entire surface of the inner core. Further optionally, x may be 0.4, 0.45, 0.5, 0.55, 0.6, 0.65, 0.7, etc.; y may be 0.0025, 0.003, 0.004, 0.005, 0.006, 0.007, 0.008, 0.009, 0.01, etc.; z may be 0, 0.001, 0.0015, 0.002, 0.0025, 0.003, etc.

In some embodiments, the boron-doped carbon material has a chemical formula of BₘC₁₋ₘ, where 0.005 ≤ m ≤ 0.01. It may be understood that m may represent a doping amount of boron element in the carbon material. Optionally, m may be 0.005, 0.006, 0.007, 0.008, 0.009, 0.01, etc. When m is small, the effect of boron doping may be difficult to realize, while when m is large, the intrinsic structure of the carbon material may be significantly changed, potentially limiting the full utilization of the carbon material's inherent advantages. Optionally, m may also be other values within a range of 0.005 to 0.01.

In some embodiments, in the coating layer, boron element is doped into the carbon lattice of the carbon material. Carbon atoms at triangular positions may be replaced by boron element because boron atoms have three valence electrons and may act as electron acceptors, resulting in shifting of Fermi level toward the conduction band. This may change the electronic structure of the coating layer. Boron atoms may act as electron acceptors, and thus the electrical conductivity and high-rate discharge performance of the positive electrode material may be further improved.

In some embodiments, the coating layer has a thickness of 5 nm to 10 nm. The thickness within this range allows the coating layer to effectively exert its effects. When the thickness is small, the protective effect of the coating layer and the improvement effect in electrical conductivity may be small, making it difficult for the coating layer to fully exert its effects. When the thickness is large, the reduction in spacing between adjacent primary particles may be limited, thereby limiting the improvement of the compaction density of a positive electrode active layer prepared by the positive electrode material. Optionally, the thickness of the coating layer may be 5 mm, 6 mm, 7 mm, 8 mm, 9 mm, 10 mm, etc. Further optionally, the thickness may also be any other values within a range of 5 nm to 10 nm.

In some embodiments, in a direction from the inside to the outside of a primary particle, the mass percentage of boron element decreases gradually. The gradual decrease in the mass percentage of boron element in the direction from the inside to the outside of the primary particle may provide corresponding adjustment on the electrical conductivity of the primary particle, thereby causing the electrical conductivity of the primary particle to decrease gradually from the inside to the outside. This may reduce the resistance encountered by lithium ions and electrons during transmission within the primary particle, thereby improving electrochemical performances of the positive electrode material. Optionally, the mass percentage of boron element in the active material is greater than the mass percentage of boron element in the boron-doped carbon material. It may be understood that, in the direction from the inside to the outside of the primary particle, the gradual decrease in the mass percentage of boron element may cause the volume of the primary particle to decrease gradually in the direction from the inside to the outside of the primary particle, thereby forming the primary particle with an oval shape.

As some optional examples of particle sizes of the primary particles, the primary particles have a D50 particle size of 0.3 µm to 0.5 µm. The primary particles have relatively small particle sizes, and uniform particles may improve the lithium-ion electrical conductivity of the active material and promote the transmission of lithium ions. Optionally, the D50 particle size of the primary particles may be 0.3 µm, 0.35 µm, 0.4 µm, 0.5 µm, etc.

As some optional examples of particle sizes of the secondary particles, the secondary particles have a D50 particle size of 7 µm to 10 µm. When the D50 particle size of the secondary particles falls within this range, a positive electrode active material layer prepared by the positive electrode material may have a higher compaction density. Optionally, the D50 particle size of the secondary particles may be 7 µm, 7.5 µm, 8 µm, 8.5 µm, 9 µm, 9.5 µm, 10 µm, etc. It should be understood that the D50 particle size of the secondary particles may also be other values within a range of 7 µm to 10 µm.

As some optional examples of specific surface areas of the positive electrode material, the positive electrode material has a specific surface area of 10 m²/g to 22 m²/g. When the specific surface area of the positive electrode material falls within this range, it may provide more transmission channels for lithium ions and improve the transmission performance of lithium ions. In addition, when the positive electrode material is applied to a battery, the specific surface area within this range facilitates the wetting of the positive electrode material by an electrolyte solution and promotes the transmission of lithium ions within the battery. Optionally, the specific surface area of the positive electrode material may be 10 m²/g, 12 m²/g, 15 m²/g, 18 m²/g, 20 m²/g, 22 m²/g, etc. It should be understood that the specific surface area of the positive electrode material may also be other values within a range of 10 m²/g to 22 m²/g.

Another embodiment of the present application provides a preparation method for the aforementioned positive electrode material. The preparation method for the positive electrode material includes the following steps: mixing a raw material with a solvent to prepare a dispersion liquid, where the raw material includes a lithium source, an iron source, a phosphorus source, and a boron source; or the raw material includes a lithium source, an M source, an iron source, a phosphorus source, and a boron source, and M includes at least one of Mg, Ti, Nb, Al, Ni, and a rare earth element; a molar ratio of boron element in the boron source to lithium element in the lithium source is (0.025-0.038):1; performing a drying and granulating treatment on the dispersion liquid to obtain a powder material; and performing a sintering treatment on the powder material under a protective gas atmosphere.

In the preparation method for the positive electrode material according to this embodiment, by controlling the ratio of elements, the amount of boron element is excess, and by performing the drying and granulating treatment and the sintering treatment, a positive electrode material, in which B-O bonds are formed between adjacent primary particles and which has a relatively high compaction density, may be obtained.

Optionally, the molar ratio of boron element in the boron source to lithium element in the lithium source may be 0.025:1, 0.026:1, 0.027:1, 0.028:1, 0.029:1, 0.03:1, 0.031:1, 0.032:1, 0.033:1, 0.034:1, 0.035:1, 0.036:1, 0.037:1, or 0.038:1, etc. It should be understood that the molar ratio of boron element in the boron source to lithium element in the lithium source may also be other values within a range of (0.025-0.038):1.

In some embodiments, the raw material further includes a carbon source. By the introduction of the carbon source, a coating layer containing a boron-doped carbon material may be prepared through the corresponding preparation method, thereby further improving performances of the positive electrode material.

In some embodiments, the boron source includes at least one of boric acid and boron oxide. During the preparation of the positive electrode material, boric acid, as a weak acid, may react with a lithium iron phosphate material such as LiFePO₄, LiMFe_{1-X}PO₄, etc., and thus B-O bonds are more uniformly formed during the preparation process. This is beneficial for further improving the compactness between adjacent primary particles, further reducing the spacing between adjacent primary particles, and thereby increasing the compaction density of a positive electrode active layer prepared by the positive electrode material.

In some embodiments, the carbon source includes at least one of glucose, sucrose, and polyethylene glycol. Optionally, the carbon source includes glucose, or sucrose, or a mixture of glucose and sucrose, or a mixture of glucose and polyethylene glycol, or a mixture of sucrose and polyethylene glycol, or a mixture of glucose, sucrose, and polyethylene glycol.

In some embodiments, the lithium source includes at least one of lithium carbonate, lithium dihydrogen phosphate, lithium hydroxide, and lithium oxalate.

In some embodiments, the M source includes at least one of magnesium oxide, titanium dioxide, niobium oxide, aluminum oxide, nickel oxide, and a rare earth oxide. Optionally, titanium dioxide is nano-titanium dioxide.

In some embodiments, the manganese source includes at least one of manganese dioxide, trimanganese tetroxide, manganese carbonate, manganese oxalate, and manganese iron oxide.

In some embodiments, the iron source includes at least one of ferric phosphate, ferrous oxalate, ferroferric oxide, ferric oxide, and manganese iron oxide.

In some embodiments, the phosphorus source includes at least one of phosphoric acid, ammonium dihydrogen phosphate, and lithium dihydrogen phosphate.

In some embodiments, the solvent includes water.

In some embodiments, a solid dispersant in the dispersion liquid has a D50 particle size of 80 nm to 150 nm. The particle size of the solid dispersant in the dispersion liquid being within this range is helpful for obtaining a powder material having a suitable particle size during the drying and granulating treatment. Optionally, the D50 particle size of the solid dispersant in the dispersion liquid may be 80 nm, 90 nm, 100 nm, 110 nm, 120 nm, 130 nm, 140 nm, 150 nm, etc. Further optionally, the D50 particle size of the solid dispersant in the dispersion liquid may also be other values within a range of 80 nm to 150 nm.

It should be understood that during the preparation of the dispersion liquid, stirring, grinding, or other methods may be used to promote the mixing of the raw material with the solvent, and to adjust the D50 particle size of the solid dispersant in the dispersion liquid.

In some embodiments, the drying and granulating treatment employs a spray drying and granulating treatment. Optionally, during the spray drying and granulating treatment, a temperature of an air inlet is 220 °C, a temperature of an air outlet is 100 °C, a rotate speed of an atomizer disc is 30,000 rpm, and a feed rate is 40 L/h. Further optionally, the spray drying and granulating treatment is carried out using a centrifugal spray dryer.

In some embodiments, the powder material obtained after the drying and granulating treatment has a D50 particle size of 4 µm to 7 µm.

In some embodiments, the sintering treatment employs a constant-temperature sintering treatment. The constant-temperature sintering treatment is beneficial for obtaining a positive electrode material having stable performances. It should be understood that the constant-temperature sintering treatment means that a constant temperature is provided in a heat preservation stage during the sintering treatment.

Further, a sintering temperature for the sintering treatment is 500 °C to 700 °C. The sintering temperature within this range is beneficial for promoting the doping of boron element in the positive electrode material. Optionally, the temperature for the sintering treatment may be 500 °C, 520 °C, 550 °C, 580 °C, 600 °C, 620 °C, 650 °C, or 700 °C, etc. Further optionally, a temperature for the sintering treatment may also be other values within a range of 500 °C to 700 °C. It should be understood that the sintering temperature refers to a holding temperature during the sintering treatment.

Furthermore, a sintering time for the sintering treatment is 6 h to 10 h. Optionally, the sintering time may be 6 h, 7 h, 8 h, 9 h, or 10 h, etc. Further optionally, the sintering time may also be other values within a range of 6 h to 10 h. It should be understood that the sintering time refers to a heat preservation time during the sintering treatment.

In some embodiments, during the sintering treatment, the temperature raises to a sintering temperature at a heating rate of 3 °C/min.

In some embodiments, the protective gas includes at least one of nitrogen and a rare gas. Optionally, the rare gas includes at least one of helium, neon, and argon. Further optionally, during the sintering treatment, a flow rate of the protective gas is 0.5 L/min.

Another embodiment of the present application provides a positive electrode sheet. The positive electrode sheet includes a positive current collector and a positive electrode active layer provided on at least one surface of the positive current collector, and the positive electrode active layer includes the aforementioned positive electrode material or a positive electrode material prepared by the aforementioned preparation method. In this embodiment, by using the aforementioned positive electrode material or a positive electrode material prepared by the aforementioned preparation method, the positive electrode active layer may have a relatively high compaction density, which helps to improve the energy density of a battery.

**In** some embodiments, the positive electrode active layer has a compaction density of 2.2 g/cm³ to 2.45 g/cm³. For example, the compaction density of the positive electrode active layer may be 2.2 g/cm³, 2.25 g/cm³, 2.3 g/cm³, 2.35 g/cm³, 2.4 g/cm³, or 2.45 g/cm³, etc. Optionally, the compaction density of the positive electrode active layer may also be other values within a range of 2.2 g/cm³ to 2.45 g/cm³.

The present application further provides a battery in another embodiment. The battery includes the aforementioned positive electrode sheet.

The present application further provides an electronic device in another embodiment. The electronic device includes the aforementioned battery.

### Example 1

A method for preparing a positive electrode material in this embodiment includes:
step 101: mixing lithium carbonate, manganese carbonate, ferric phosphate, ammonium dihydrogen phosphate, and boric acid with deionized water, where a molar ratio of boron element in boric acid to lithium element in lithium carbonate is 0.025:1; and performing stirring and then grinding in a sand mill to obtain a dispersion liquid, where a solid dispersant in the dispersion liquid has a D50 particle size of 100 nm;
step 102: performing a drying and granulating treatment on the dispersion liquid using a centrifugal spray dryer to obtain a powder material, where the powder material has a D50 particle size of 4 µm, and in the centrifugal spray dryer, an air inlet temperature is 220 °C, an air outlet temperature is 100 °C, an atomizer disc's rotate speed is 30,000 rpm, and a feed rate is 40 L/h;
step 103: performing a sintering treatment on the powder material and glucose under a nitrogen atmosphere, where sintering conditions are that nitrogen is provided in a flow rate of 0.5 L/min, temperature rises to 650 °C at a heating rate of 3min/°C, and sintering is performed at a constant temperature of 650 °C for 8 hours;
step 104: performing a cooling treatment to room temperature after the sintering treatment, to obtain the positive electrode material.

A chemical composition and parameters of the positive electrode material prepared in this embodiment are shown in Table 1.

### Example 2

A method for preparing a positive electrode material in this embodiment includes:
step 101: mixing lithium dihydrogen phosphate, manganese oxalate, ferrous oxalate, glucose, and boric acid with deionized water, where a molar ratio of boron element in boric acid to lithium element in lithium dihydrogen phosphate is 0.034:1; and performing stirring and then grinding in a sand mill to obtain a dispersion liquid, where a solid dispersant in the dispersion liquid has a D50 particle size of 100 nm;
step 102: performing a drying and granulating treatment on the dispersion liquid using a centrifugal spray dryer to obtain a powder material, where the powder material has a D50 particle size of 4 µm, and in the centrifugal spray dryer, an air inlet temperature is 220 °C, an air outlet temperature is 100 °C, an atomizer disc's rotate speed is 30,000 rpm, and a feed rate is 40 L/h;
step 103: performing a sintering treatment on the powder material under a nitrogen atmosphere, where sintering conditions are that nitrogen is provided in a flow rate of 0.5 L/min, temperature rises to 650 °C at a heating rate of 3min/°C, and sintering is performed at a constant temperature of 650 °C for 8 hours;
step 104: performing a cooling treatment to room temperature after the sintering treatment, to obtain the positive electrode material.

A chemical composition and parameters of the positive electrode material prepared in this embodiment are shown in Table 1.

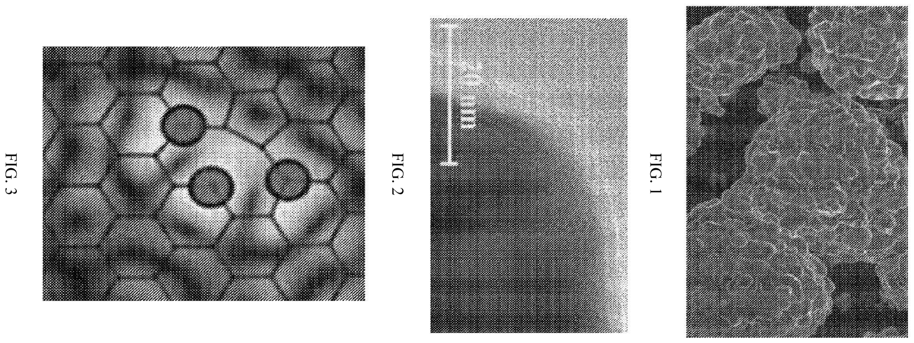

A SEM image of the positive electrode material prepared in this embodiment is shown in FIG 1. As can be seen from FIG 1, in the positive electrode material, boundaries between adjacent primary particles are blurred. This indicates that primary particles have a certain degree of compatibility, resulting in a small spacing between primary particles. Furthermore, a TEM image of the positive electrode material is shown in FIG 2. As can be seen from FIG 2, a connection layer is formed on a surface of each of primary particles. Raman spectroscopy analysis reveals that the connection layer is provided with B-O bonds, and the connection layer includes a BO₃ substance. Connection layers enable a tighter connection between adjacent primary particles. Moreover, a STM image of the positive electrode material is shown in FIG 3. In FIG 3, circles represent boron atoms, and vertices of hexagons represent carbon atoms. As shown in FIG 3, boron element is doped into the carbon lattice of the carbon material in the coating layer.

### Example 3

Compared with Example 2, Example 3 differs in that some elements in the raw material are in different ratio, where the molar ratio of boron element in boric acid to lithium element in lithium dihydrogen phosphate is 0.038:1.

### Example 4

Compared with Example 2, Example 3 differs in that some elements in the raw material are in different ratio, where the molar ratio of boron element in boric acid to lithium element in lithium dihydrogen phosphate is 0.035:1.

### Example 5

Compared with Example 2, this example differs in that the raw material further includes magnesium oxide.

### Example 6

Compared with Example 2, this example differs in that the raw material further includes nano-titanium dioxide.

### Example 7

Compared with Example 2, this example differs in that the raw material further includes niobium oxide.

### Comparative Example 1

A positive electrode material in this comparative example is carbon-coated LiMn_{0.4}Fe_{0.6}PO₄.

### Comparative Example 2

Compared with Example 1, this example differs in that some elements in the raw material are in different ratio, where the molar ratio of boron element in boric acid to lithium element in lithium dihydrogen phosphate is 0.015:1.

### Comparative Example 3

Compared with Example 1, this example differs in that some elements in the raw material are in different ratio, where the molar ratio of boron element in boric acid to lithium element in lithium dihydrogen phosphate is 0.020:1.

A positive electrode sheet is prepared by mixing the positive electrode material, PVDF, and acetylene black in a ratio of 8:1:1, and adding an appropriate amount of an organic solvent NMP to obtain a slurry; then coating the slurry onto a carbon-coated aluminum foil.

A coin cell battery is prepared, with the positive electrode sheet as a positive electrode, a lithium metal sheet as a negative electrode, a microporous polypropylene membrane as a separator, and 1 M of LiPF₆ (a mixture of EC and EMC in a volume ratio of 3:7 is used as a solvent) as an electrolyte solution.

### Test Example

### (1) Compaction densities of positive electrode active layers are tested, and results are shown in Table 1.

A compaction density meter is used to measure compaction densities. Under a condition of 25 °C ± 2 °C, a cleaned empty mold (including upper/lower testing electrodes/spacers) is placed into a testing device, and thickness reset is performed at a matched test software side. After reset, an appropriate amount of a sample to be tested is weighed and placed into the mold. The sample is then subjected to appropriate leveling by tapping. Testing electrodes/spacers are placed. The mold is then placed into the testing device, and the software is started to perform testing.

### (2) Discharge capacities of positive electrode active layers are tested, and results are shown in Table 1.

A prepared battery is placed in a battery testing system to evaluate its electrochemical performances. Charge/discharge currents at respective rates and the number of cycles are set (discharge cut-off voltage: 2.0 V, charge cut-off voltage: 4.3 V). The battery testing system is started, and a mass of a positive electrode material is input. After the testing is completed, data is read.

**Table 1**

| | Positive electrode material | Mass percentage of boron element in primary particles | Coating layer material | Coating layer thickness (nm) | D50 particle size of primary particles (µm) | D50 particle size of secondary particles (µm) | Compaction density (g/cm³) | 0.1C discharge capacity (mAh/g) | 0.5C discharge capacity (mAh/g) |
|---|---|---|---|---|---|---|---|---|---|
| Example 1 | LiMn_{0.4}Fe_{0.6} (BO₃)_{0.0025}( PO₄)_{0.9975} | 0.78% | c | 8.3 | 0.35 | 7.8 | 2.32 | 140.7 | 132.8 |
| Example 2 | LiMn_{0.4}Fe_{0.6} (BO₃)_{0.003}(P O₄)_{0.997} | 0.89% | B_{0.01}C_{0.99} | 7.8 | 0.48 | 9.6 | 2.39 | 148.9 | 144.2 |
| Example 3 | LiMn_{0.5}Fe_{0.5} (BO₃)_{0.003}(P O₄)_{0.997} | 0.88% | B_{0.01}C_{0.99} | 8.0 | 0.44 | 9.4 | 2.37 | 149.7 | 144.3 |
| Example 4 | LiMn_{0.6}Fe_{0.4} (BO₃)_{0.003}(P O₄)_{0.997} | 0.89% | B_{0.01}C_{0.99} | 7.7 | 0.44 | 9.3 | 2.36 | 150.2 | 144.5 |
| Example 5 | LiMg_{0.003}(M n_{0.4}Fe_{0.6})_{0.997} (BO₃)_{0.0027}( PO₄)_{0.9973} | 0.84% | B_{0.009}C_{0.992} | 7.5 | 0.45 | 9.7 | 2.44 | 150.5 | 145.0 |
| Example 6 | LiTi_{0.002}(Mn _{0.4}Fe_{0.6})_{0.998}( BO₃)_{0.0026}(P O₄)_{0.9974} | 0.84% | B_{0.008}C_{0.992} | 7.6 | 0.45 | 9.8 | 2.40 | 149.8 | 144.8 |
| Example 7 | LiNb_{0.001}(M n_{0.4}Fe_{0.6})_{0.999} (BO₃)_{0.0029}( PO₄)_{0.9971} | 0.86% | B_{0.009}C_{0.991} | 7.5 | 0.46 | 9.7 | 2.41 | 149.5 | 144.2 |
| Compara tive Example 1 | LiMn_{0.4}Fe_{0.6} PO₄ | / | C | 8.9 | 0.50 | 6.2 | 2.10 | 119.2 | 113.5 |
| Compara tive Example 2 | LiMn_{0.4}Fe_{0.6} (BO₃)_{0.0015}( PO₄)_{0.9975} | 0.2% | C | 8.8 | 0.52 | 6.6 | 2.16 | 128.8 | 120.6 |
| Compara tive Example 3 | LiMn_{0.4}Fe_{0.6} (BO₃)_{0.0020}( PO₄)_{0.9975} | 0.4% | C | 9.2 | 0.52 | 7.1 | 2.21 | 132.7 | 127.2 |

It may be seen from Example 1 and Comparative Examples 1-3 that in Examples 1-7, by introducing boron into the positive electrode active materials, and making the mass percentage of boron element in primary particles fall within a suitable range, the obtained positive electrode materials may achieve both larger compaction density of positive electrode active layers and higher discharge capacity.

It may be seen from Examples 2-7 and Example 1 that when the coating layers are BₘC₁₋ₘ, i.e., boron is introduced into the coating layers, the discharge capacity of the positive electrode active materials may be further improved.

Various technical features in the aforementioned embodiments can be combined in any manner. To make the description concise, not all possible combinations of the technical features in the aforementioned embodiments have been described. However, any combination of these technical features that does not result in contradictions should be considered within the scope disclosed in this specification.

The above embodiments only describe several implementations of the present application, and their descriptions are relatively specific and detailed, but they should not be understood as limiting the scope of the patent application. It should be noted that for those skilled in the art, several modifications and improvements may still be made without departing from the concept of the present application, all of which fall within the protection scope of the present application. Therefore, the protection scope of the present patent application shall be determined by the appended claims, and the specification and drawings may be used to interpret the contents of the claims.

## Claims

1. A positive electrode material, comprising secondary particles formed by the agglomeration of primary particles, and each of the primary particles comprises an active material having a chemical formula of LiM_{z}(MnₓFe₁₋ₓ)_{1-z}(BO₃)_{y}(PO₄)_{1-y}, wherein M comprises at least one of Mg, Ti, Nb, Al, Ni, and a rare earth element, 0.4 ≤ x ≤ 0.7, 0.0025 ≤ y ≤ 0.01, and 0 ≤ z ≤ 0.003, wherein boron element in the primary particles has a mass percentage of 0.5% to 1%, and B-O bonds are provided between adjacent primary particles.

2. The positive electrode material according to claim 1, wherein each of the primary particles further comprises a coating layer provided on a surface of the active material, and the coating layer comprises a boron-doped carbon material.

3. The positive electrode material according to claim 2, wherein the boron-doped carbon material has a chemical formula of BₘC₁₋ₘ, wherein 0.005 ≤ m ≤ 0.01.

4. The positive electrode material according to any one of claims 1-3, wherein each of the primary particles has a D50 particle size of 0.3 µm to 0.5 µm.

5. The positive electrode material according to any one of claims 1-3, wherein the secondary particle has a D50 particle size of 7 µm to 10 µm.

6. A preparation method for the positive electrode material according to any one of claims 1-5, comprising the following steps:
mixing a raw material with a solvent to prepare a dispersion liquid, where the raw material includes a lithium source, an iron source, a phosphorus source, and a boron source; or the raw material includes a lithium source, an M source, an iron source, a phosphorus source, and a boron source, and M includes at least one of Mg, Ti, Nb, Al, Ni, and a rare earth element; a molar ratio of boron element in the boron source to lithium element in the lithium source is (0.025-0.038):1;
performing a drying and granulating treatment on the dispersion liquid to obtain a powder material;
performing a sintering treatment on the powder material under a protective gas atmosphere.

7. The preparation method for the positive electrode material according to claim 6, wherein the raw material further comprises a carbon source.

8. The preparation method for the positive electrode material according to claim 6, wherein the boron source comprises at least one of boric acid and boron oxide.

9. The preparation method for the positive electrode material according to any one of claims 6-8, wherein a solid dispersant in the dispersion liquid has a D50 particle size of 80 nm to 150 nm.

10. The preparation method for the positive electrode material according to any one of claims 6-9, wherein the sintering treatment is a constant-temperature sintering treatment.

11. The preparation method for the positive electrode material according to any one of claims 6-10, wherein a sintering temperature for the sintering treatment is 500 °C to 700 °C.

12. The preparation method for the positive electrode material according to any one of claims 6-11, wherein a sintering time for the sintering treatment is 6 h to 10 h.

13. A positive electrode sheet, comprising a positive current collector and a positive electrode active layer provided on at least one surface of the positive current collector, and the positive electrode active layer comprises the positive electrode material according to any one of claims 1-5 or a positive electrode material prepared by the preparation method according to any one of claims 6-12.

14. A battery, comprising the positive electrode sheet according to claim 13.

15. An electronic device, comprising the battery according to claim 14.
